# EUROPEAN PATENT APPLICATION

(11) **EP 4 280 780 A1**
(43) Date of publication of application: **22.11.2023**
(21) Application number: 21918206.0
(22) Date of filing: 12.01.2021
(51) Int. Cl.: H04W 74/00, H04W 74/08

(54) **ACCESS RESOURCE DETERMINATION METHOD, ACCESS RESOURCE DETERMINATION APPARATUS AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: dompatent von Kreisler Selting Werner - Partnerschaft von Patent- und Rechtsanwälten mbB
(86) International application number: PCT/CN2021/071332
(87) International publication number: WO 2022/150988

(57) **Abstract**

The present disclosure relates to an access resource determination method, an access resource determination apparatus and a storage medium. The access resource determination method is applied to a network device. The method comprises: determining a first bandwidth part (BWP), wherein the first BWP at least comprises physical random access channel (PRACH) resources used for a first type of terminals that need to perform coverage enhancement, and/or PRACH resources for a second type of terminals. By means of the present disclosure, a sharing mechanism of PRACH resources used for the first type of terminals that need to perform coverage enhancement and PRACH resources used for the second type of terminals may be implemented, and the division of PRACH resources for the first type of terminals that need to perform coverage enhancement may be effectively reduced, thereby reducing resource fragmentation and resource waste.

## Description

### TECHNICAL FIELD

The disclosure relates to a field of wireless communication technology, in particular to a method for determining an access resource, an apparatus for determining an access resource and a storage medium.

### BACKGROUND

In a wireless communication system, machine type communication (MTC) technology and narrow band Internet of Things (NB-IoT) technology are proposed for low-rate and high-latency scenarios in Internet of Things (IoT) services. Due to the development of the IoT services, the MTC technology and NB-IoT technology can no longer satisfy the rate and latency requirements of current IoT services. Therefore, a new kind of terminal, i.e., a Reduced capability (Redcap) terminal, or called a NR-lite for short, is designed to cover the IoT service requirements.

In the related art, when an initial bandwidth part (BWP) configured by the system for a terminal with normal sending-and-receiving capability is relatively large, a separate initial BWP may be configured for a Redcap terminal with a limited sending-and-receiving bandwidth. In order to enable the network to identify a terminal with coverage enhancement in advance, it is necessary to classify physical random access channel (PRACH) resources in the BWP. Therefore, the PRACH resources may be classified respectively for different BWPs, resulting in problems such as unreasonable PRACH resource reservation and waste of PRACH resources.

### SUMMARY

To overcome the problems in the related art, the disclosure provides a method for determining an access resource, an apparatus for determining an access resource and a storage medium.

According to a first aspect of the embodiments of the disclosure, a method for determining an access resource, applied to a network device, is provided. The method includes:
determining a first bandwidth part (BWP), in which the first BWP at least includes a physical random access channel (PRACH) resource for a terminal of a first type that needs to perform coverage enhancement, and/or a PRACH resource for a terminal of a second type.

In an implementation, the first BWP includes a plurality of PRACH resources for the terminal of the first type that needs to perform coverage enhancement, and the plurality of PRACH resources are determined based on a plurality of coverage enhancement levels; and the plurality of coverage enhancement levels are a plurality of coverage enhancement levels of the terminal of the first type that needs to perform coverage enhancement.

In an implementation, the first BWP includes a plurality of PRACH resources for a terminal of the second type that needs to perform coverage enhancement, and/or,
the first BWP includes a PRACH resource for a terminal of the second type that does not need to perform coverage enhancement.

In an implementation, the plurality of PRACH resources are determined based on a plurality of coverage enhancement levels; and
the plurality of coverage enhancement levels are a plurality of coverage enhancement levels of the terminal of the second type that needs to perform coverage enhancement.

In an implementation, the plurality of PRACH resources and the plurality of coverage enhancement levels are in a one-to-one mapping relation.

In an implementation, the method further includes:
determining a second BWP, in which the second BWP at least includes a PRACH resource for a terminal of the first type that does not need to perform coverage enhancement.

In an implementation, the second BWP further includes the PRACH resource for the terminal of the second type.

In an implementation, the second BWP further includes one or a combination of the following resources:
a PRACH resource for the first type that does not need to perform coverage enhancement; a PRACH resource for a terminal of the second type that needs to perform coverage enhancement; or a PRACH resource for a terminal of the second type that does not need to perform coverage enhancement.

In an implementation, the PRACH resource that needs to perform coverage enhancement, the PRACH resource for the terminal of the first type that does not need to perform coverage enhancement, and the PRACH resource for the terminal of the second type that does not need to perform coverage enhancement are different.

In an implementation, the PRACH resource for the terminal of the first type and/or the PRACH resource for the terminal of the second type includes at least one of the followings:
a PRACH time domain resource;
a PRACH frequency domain resource; and
a PRACH preamble.

In an implementation, the coverage enhancement level is determined based on a reference signal received power (RSRP) measurement value of the terminal.

In an implementation, the method further includes:
sending an access resource configuration parameter associated with the first BWP and/or an access resource configuration parameter associated with the second BWP.

In an implementation, sending the access resource configuration parameter associated with the first BWP and/or the access resource configuration parameter associated with the second BWP, includes:
sending remaining minimum system information (RMSI), the RMSI including the access resource configuration parameter associated with the first BWP and/or the access resource configuration parameter associated with the second BWP.

In an implementation, the access resource configuration parameter associated with the first BWP and/or the access resource configuration parameter associated with the second BWP include at least one of the followings:
a frequency domain location of the first BWP and/or a frequency domain location of the second BWP;
PRACH resource configuration for the terminal of the first type that needs to perform coverage enhancement in the first BWP;
PRACH resource configuration for the terminal of the second type;
PRACH resource configuration for the terminal of the first type that does not need to perform coverage enhancement in the second BWP; and
a mapping relation between a plurality of coverage enhancement levels and a plurality of RACH resources in the first BWP.

In an implementation, the method further includes:
receiving first indication information, the first indication information including capability information associated with the terminal of the second type.

In an implementation, receiving the first indication information, includes:
receiving the first indication information based on an access message; or receiving the first indication information based on a radio resource control (RRC) signaling.

According to a second aspect of the embodiments of the disclosure, a method for determining an access resource, applied to a terminal, is provided. The method includes:
determining a first BWP; in which
the terminal is a terminal of a first type that needs to perform coverage enhancement or a terminal of a second type;
the first BWP at least includes a PRACH resource for the terminal of the first type that needs to perform coverage enhancement, and/or a PRACH resource for the terminal of the second type; and
the terminal of the first type has a greater capacity than the terminal of the second type.

In an implementation, the first BWP includes a plurality of PRACH resources for the terminal of the first type that needs to perform coverage enhancement, and the plurality of PRACH resources are determined based on a plurality of coverage enhancement levels; and
the plurality of coverage enhancement levels are a plurality of coverage enhancement levels of the terminal of the first type that needs to perform coverage enhancement.

In an implementation, the first BWP includes a plurality of PRACH resources for a terminal of the second type that needs to perform coverage enhancement, and/or,
the first BWP includes a PRACH resource for a terminal of the second type that does not need to perform coverage enhancement.

In an implementation, the plurality of PRACH resources are determined based on a plurality of coverage enhancement levels; and
the plurality of coverage enhancement levels are a plurality of coverage enhancement levels of the terminal of the second type that needs to perform coverage enhancement.

In an implementation, the plurality of PRACH resources and the plurality of coverage enhancement levels are in a one-to-one mapping relation.

In an implementation, the method further includes:
in response to the terminal being a terminal of the first type that does not need to perform coverage enhancement, determining a second BWP, in which the second BWP at least includes a PRACH resource for the terminal of the first type that does not need to perform coverage enhancement.

In an implementation, the method further includes:
in response to the terminal being the terminal of the second type, determining a second BWP, in which the second BWP includes the PRACH resource for the terminal of the second type.

In an implementation, the second BWP further includes at least one of the followings:
a PRACH resource for the first type that does not need to perform coverage enhancement;
a PRACH resource for a terminal of the second type that needs to perform coverage enhancement; or
a PRACH resource for a terminal of the second type that does not need to perform coverage enhancement.

In an implementation, the PRACH resource that needs to perform coverage enhancement, the PRACH resource for the terminal of the first type that does not need to perform coverage enhancement, and the PRACH resource for the terminal of the second type that does not need to perform coverage enhancement are different.

In an implementation, the PRACH resource for the terminal of the first type and/or the PRACH resource for the terminal of the second type includes at least one of the followings:
a PRACH time domain resource;
a PRACH frequency domain resource; and
a PRACH preamble.

In an implementation, the coverage enhancement level is determined based on a RSRP measurement value of the terminal.

In an implementation, the method further includes:
receiving an access resource configuration parameter associated with the first BWP and/or an access resource configuration parameter associated with the second BWP.

In an implementation, receiving the access resource configuration parameter associated with the first BWP and/or the access resource configuration parameter associated with the second BWP, includes:
receiving RMSI, the RMSI including the access resource configuration parameter associated with the first BWP and/or the access resource configuration parameter associated with the second BWP.

In an implementation, the access resource configuration parameters associated with the first BWP and/or the access resource configuration parameters associated with the second BWP include at least one of the followings:
a frequency domain location of the first BWP and/or a frequency domain location of the second BWP;
PRACH resource configuration for the terminal of the first type that needs to perform coverage enhancement in the first BWP;
PRACH resource configuration for the terminal of the second type;
PRACH resource configuration for the terminal of the first type that does not need to perform coverage enhancement in the second BWP; and
a mapping relation between a plurality of coverage enhancement levels and a plurality of RACH resources in the first BWP.

In an implementation, the method further includes:
in response to the terminal being the terminal of the second type, sending first indication information, the first indication information including capability information associated with the terminal of the second type.

In an implementation, sending the first indication information, includes:
sending the first indication information based on an access message; or sending the first indication information based on an RRC signaling.

According to a third aspect of the embodiments of the disclosure, an apparatus for determining an access resource, applied to a network device, is provided. The apparatus includes:
a determining module, configured to determine a first BWP, in which the first BWP at least includes a PRACH resource for a terminal of a first type that needs to perform coverage enhancement, and/or a PRACH resource for a terminal of a second type.

In an implementation, the first BWP includes a plurality of PRACH resources for the terminal of the first type that needs to perform coverage enhancement, and the plurality of PRACH resources are determined based on a plurality of coverage enhancement levels; and the plurality of coverage enhancement levels are a plurality of coverage enhancement levels of the terminal of the first type that needs to perform coverage enhancement.

In an implementation, the first BWP includes a plurality of PRACH resources for a terminal of the second type that needs to perform coverage enhancement, and/or,
the first BWP includes a PRACH resource for a terminal of the second type that does not need to perform coverage enhancement.

In an implementation, the plurality of PRACH resources are determined based on a plurality of coverage enhancement levels; and
the plurality of coverage enhancement levels are a plurality of coverage enhancement levels of the terminal of the second type that needs to perform coverage enhancement.

In an implementation, the plurality of PRACH resources and the plurality of coverage enhancement levels are in a one-to-one mapping relation.

In an implementation, the determining module is further configured to:
determine a second BWP, in which the second BWP at least includes a PRACH resource for a terminal of the first type that does not need to perform coverage enhancement.

In an implementation, the second BWP further includes the PRACH resource for the terminal of the second type.

In an implementation, the second BWP further includes one or a combination of the following resources:
a PRACH resource for the first type that does not need to perform coverage enhancement; a PRACH resource for a terminal of the second type that needs to perform coverage enhancement; or a PRACH resource for a terminal of the second type that does not need to perform coverage enhancement.

In an implementation, the PRACH resource that needs to perform coverage enhancement, the PRACH resource for the terminal of the first type that does not need to perform coverage enhancement, and the PRACH resource for the terminal of the second type that does not need to perform coverage enhancement are different.

In an implementation, the PRACH resource for the terminal of the first type and/or the PRACH resource for the terminal of the second type includes at least one of the followings:
a PRACH time domain resource;
a PRACH frequency domain resource; and
a PRACH preamble.

In an implementation, the coverage enhancement level is determined based on a RSRP measurement value of the terminal.

In an implementation, the apparatus further includes:
a sending module, configured to send an access resource configuration parameter associated with the first BWP and/or an access resource configuration parameter associated with the second BWP.

In an implementation, the sending module is further configured to:
send RMSI, the RMSI including the access resource configuration parameter associated with the first BWP and/or the access resource configuration parameter associated with the second BWP.

In an implementation, the access resource configuration parameter associated with the first BWP and/or the access resource configuration parameter associated with the second BWP includes at least one of the followings:
a frequency domain location of the first BWP and/or a frequency domain location of the second BWP;
PRACH resource configuration for the terminal of the first type that needs to perform coverage enhancement in the first BWP;
PRACH resource configuration for the terminal of the second type;
PRACH resource configuration for the terminal of the first type that does not need to perform coverage enhancement in the second BWP; and
a mapping relation between a plurality of coverage enhancement levels and a plurality of RACH resources in the first BWP.

In an implementation, the apparatus further includes:
a receiving module, configured to receive first indication information, the first indication information including capability information associated with the terminal of the second type.

In an implementation, the receiving module is further configured to:
receive the first indication information based on an access message; or receive the first indication information based on an RRC signaling.

According to a fourth aspect of the embodiments of the disclosure, an apparatus for determining an access resource, applied to a terminal, is provided. The apparatus includes:
a determination module, configured to determine a first BWP; in which
the terminal is a terminal of a first type that needs to perform coverage enhancement or a terminal of a second type;
the first BWP at least includes a PRACH resource for the terminal of the first type that needs to perform coverage enhancement, and/or a PRACH resource for the terminal of the second type; and
the terminal of the first type has a greater capacity than the terminal of the second type.

In an implementation, the first BWP includes a plurality of PRACH resources for the terminal of the first type that needs to perform coverage enhancement, and the plurality of PRACH resources are determined based on a plurality of coverage enhancement levels; and
the plurality of coverage enhancement levels are a plurality of coverage enhancement levels of the terminal of the first type that needs to perform coverage enhancement.

In an implementation, the first BWP includes a plurality of PRACH resources for a terminal of the second type that needs to perform coverage enhancement, and/or,
the first BWP includes a PRACH resource for a terminal of the second type that does not need to perform coverage enhancement.

In an implementation, the plurality of PRACH resources are determined based on a plurality of coverage enhancement levels; and
the plurality of coverage enhancement levels are a plurality of coverage enhancement levels of the terminal of the second type that needs to perform coverage enhancement.

In an implementation, the plurality of PRACH resources and the plurality of coverage enhancement levels are in a one-to-one mapping relation.

In an implementation, the determination module is further configured to:
in response to the terminal being a terminal of the first type that does not need to perform coverage enhancement, determine a second BWP, in which the second BWP at least includes a PRACH resource for the terminal the first type that does not need to perform coverage enhancement.

In an implementation, the determination module is further configured to:
in response to the terminal being the terminal of the second type, determine a second BWP, in which the second BWP includes the PRACH resource for the terminal of the second type.

In an implementation, the second BWP further includes at least one of the followings:
a PRACH resource for the first type that does not need to perform coverage enhancement;
a PRACH resource for a terminal of the second type that needs to perform coverage enhancement; or
a PRACH resource for a terminal of the second type that does not need to perform coverage enhancement.

In an implementation, the PRACH resource that needs to perform coverage enhancement, the PRACH resource for the terminal of the first type that does not need to perform coverage enhancement, and the PRACH resource for the terminal of the second type that does not need to perform coverage enhancement are different.

In an implementation, the PRACH resource for the terminal of the first type and/or the PRACH resource for the terminal of the second type includes at least one of the followings:
a PRACH time domain resource;
a PRACH frequency domain resource; and
a PRACH preamble.

In an implementation, the coverage enhancement level is determined based on an RSRP measurement value of the terminal.

In an implementation, the apparatus further includes:
a reception module, configured to receive an access resource configuration parameter associated with the first BWP and/or an access resource configuration parameter associated with the second BWP.

In an implementation, the reception module is further configured to:
receive RMSI, the RMSI including the access resource configuration parameter associated with the first BWP and/or the access resource configuration parameter associated with the second BWP.

In an implementation, the access resource configuration parameter associated with the first BWP and/or the access resource configuration parameter associated with the second BWP includes at least one of the followings:
a frequency domain location of the first BWP and/or a frequency domain location of the second BWP;
PRACH resource configuration for the terminal of the first type that needs to perform coverage enhancement in the first BWP;
PRACH resource configuration for the terminal of the second type;
PRACH resource configuration for the terminal of the first type that does not need to perform coverage enhancement in the second BWP; and
a mapping relation between a plurality of coverage enhancement levels and a plurality of RACH resources in the first BWP.

In an implementation, the apparatus further includes:
a transmission module, configured to, in response to the terminal being the terminal of the second type, send first indication information, the first indication information including capability information associated with the terminal of the second type.

In an implementation, the transmission module is further configured to:
send the first indication information based on an access message; or send the first indication information based on an RRC signaling.

According to a fifth aspect of the embodiments of the disclosure, a device for determining an access resource is provided. The device includes:
a processor and a memory for storing instructions executable by the processor; in which the processor is configured to implement the method for determining an access resource of the first aspect or any implementation of the first aspect.

According to a sixth aspect of the embodiments of the disclosure, a device for determining an access resource is provided. The device includes:
a processor and a memory for storing instructions executable by the processor; in which the processor is configured to implement the method for determining an access resource of the second aspect or any implementation of the second aspect.

According to a seventh aspect of the embodiments of the disclosure, a non-transitory computer readable storage medium having instructions stored thereon is provided. When the instructions are executed by a processor, a network device is caused to implement the method for determining an access resource of the first aspect or any implementation of the first aspect.

According to an eighth aspect of the embodiments of the disclosure, a non-transitory computer readable storage medium having instructions stored thereon is provided. When the instructions are executed by a processor, a mobile terminal is caused to implement the method for determining an access resource of the second aspect or any implementation of the second aspect.

The technical solutions provided by the embodiments of the disclosure may include the following beneficial effects. The PRACH resource for the terminal of the first type that needs to perform coverage enhancement and the PRACH resource for the terminal of the second type can be shared, which can effectively reduce the classification of PRACH resources for the terminal of the first type that needs to perform coverage enhancement, thereby reducing the number of resource fragmentations and resource waste.

It should be understood that the above general description and the following detailed descriptions are exemplary and explanatory only and do not limit the disclosure.

### BRIEF DESCRIPTION OF THE DRAWINGS

The accompanying drawings, which are incorporated in and constitute a part of this specification, illustrate embodiments consistent with the disclosure and together with the description serve to explain the principles of the disclosure.
FIG. 1 is a schematic diagram of a communication system between a network device and terminals according to an exemplary embodiment.
FIG. 2 is a schematic diagram of classifying PRACH resources according to an exemplary embodiment.
FIG. 3 is a flowchart of a method for allocating an access resource according to an exemplary embodiment.
FIG. 4 is a flowchart of a method for allocating an access resource according to an exemplary embodiment.
FIG. 5 is a schematic diagram of allocating access resources according to an exemplary embodiment.
FIG. 6 is a flowchart of a method for allocating an access resource according to an exemplary embodiment.
FIG. 7 is a flowchart of a method for allocating an access resource according to an exemplary embodiment.
FIG. 8 is a flowchart of a method for allocating an access resource according to an exemplary embodiment.
FIG. 9 is a flowchart of a method for allocating an access resource according to an exemplary embodiment.
FIG. 10 is a flowchart of a method for allocating an access resource according to an exemplary embodiment.
FIG. 11 is a flowchart of a method for allocating an access resource according to an exemplary embodiment.
FIG. 12 is a flowchart of a method for allocating an access resource according to an exemplary embodiment.
FIG. 13 is a flowchart of a method for allocating an access resource according to an exemplary embodiment.
FIG. 14 is a flowchart of a method for allocating an access resource according to an exemplary embodiment.
FIG. 15 is a block diagram of an apparatus for configuring an access resource according to an exemplary embodiment.
FIG. 16 is a block diagram of an apparatus for configuring an access resource according to an exemplary embodiment.
FIG. 17 is a block diagram of a device for determining an access resource according to an exemplary embodiment.
FIG. 18 is a block diagram of a device for determining an access resource according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

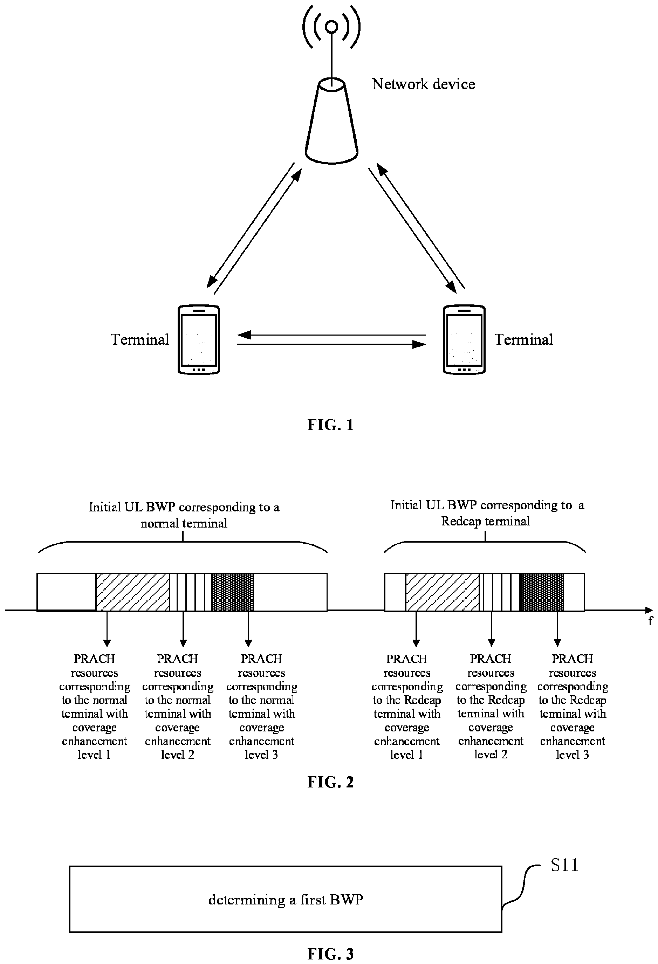

FIG. 1 is a schematic diagram of a communication system between a network device and terminals according to an exemplary embodiment. The communication method provided by the disclosure can be applied in the communication system shown in FIG. 1. As shown in FIG. 1, a network side device may send a signaling based on an architecture shown in FIG. 1.

It is understood that the communication system between the network device and the terminals shown in FIG. 1 is only for schematic illustration, and other network devices may be included in a wireless communication system, such as core network devices, wireless relay devices and wireless backhaul devices, which are not shown in FIG. 1. The number of network devices and the number of terminals included in the wireless communication system are not limited in the embodiments of the disclosure.

It is further understood that the wireless communication system of the embodiments of the disclosure is a network that provides the wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), and carrier sense multiple access / collision avoidance. Depending on factors such as capacity, rate, and delay of different networks, the networks can be classified as a second Generation (2G) network, a 3G network, a 4G network, or a future evolved network, such as a 5G network, which can also be called a new radio (NR) network. For easy of description, in this disclosure, sometimes the wireless communication network is simply referred to as a network.

The network device involved in the disclosure may also be referred to as a radio access network device. The radio access network device may be: a base station, an evolved base station (evolved node B, i.e., eNB), a femtocell, an access point (AP) in a wireless fidelity (WIFI) system, a radio relay node, a radio backhaul node, a transmission point (TP) or a transmission and reception point (TRP), a gNB in an NR system, or components or a part of the devices that constitute the base station. The network device may also be a vehicle-mounted device in a vehicle to everything (V2X) communication system. It should be understood that the specific technology and the specific device form used by the network device are not limited in the embodiments of the disclosure.

The terminal involved in the disclosure may also be referred to as a terminal device, user equipment (UE), a mobile station (MS), or a mobile terminal (MT), which is a device that provides voice and/or data connectivity to a user. For example, the terminal can be a handheld device or a vehicle-mounted device with a wireless connectivity function. For example, the existing terminals include a mobile phone, a pocket personal computer (PPC), a handheld computer, a personal digital assistant (PDA), a laptop, a tablet computer, a wearable device, or a vehicle-mounted device, etc. In addition, the terminal device may also be a vehicle-mounted device in the V2X communication system. It should be understood that the specific technology and the specific device form used by the terminal are not limited in the embodiments of this disclosure.

The machine type communication (MTC) technology and the narrow band Internet of Things (NB-IoT) technology are proposed for a reduced capability (Redcap) UE in communication systems, such as a long term evolution (LTE) 4G system, to support Internet of Things (IoT) services. These two technologies are mainly focusing on low-rate and high-latency scenarios, such as meter reading, environmental monitoring, and other scenarios. The NB-IoT technology currently supports a maximum transmission rate of several hundred kbps (kilo bits per second), while the MTC technology currently supports a maximum transmission rate of several Mbps (million bits per second). However, with the continuous development of IoT services, such as population of services such as video monitoring, smart home, wearable device and industrial sensing monitoring, these services usually require a transmission rate ranging from tens of Mbps to 100 Mbps, and the above services also have relatively high requirements for latency, thus the MTC technology and the NB-IoT technology in the LTE can hardly satisfy the requirements of the above services. Based on this case, designing a new UE in the 5G NR is proposed to cover the requirements of such mid-end IoT devices. In the current 3rd Generation Partnership Project (3GPP) standardization, this new terminal type is called Redcap terminal or simply referred to NR-lite. The Redcap terminal is configured with a relatively small bandwidth. Therefore, for the Redcap terminal, coverage enhancement is required due to the reduction in bandwidth size, which may bring about a reduction in antenna radiation efficiency and a loss of coverage.

When the communication system includes both normal terminals (e.g., normal 5G terminals) and Redcap terminals, an initial uplink (UL) bandwidth part (BWP) may be configured for the Redcap terminals separately when an initial UL BWP configured for the normal terminals by the communication network system is greater than 20 MHz.

For a Redcap terminal with a small bandwidth, its sending and receiving antenna efficiency may have a 3db loss. Therefore, in some cases, coverage enhancement is required for Msg. 3 and channels such as physical uplink shared channel (PUSCH). Meanwhile, in order for the network device to make specific configuration for the Redcap terminal, the Redcap terminal may perform an early indication, for example, may perform an early indication for the classification of physical random access channel (PRACH) resources.

For a normal terminal, in the related art, all the normal terminals share one initial UL BWP. However, a part of the normal terminals also need the coverage enhancement. Therefore, in order for the network device to identify a terminal that performs the coverage enhancement in advance, similarly, the PRACH resources may need to be classified.

FIG. 2 is a schematic diagram of classifying PRACH resources according to an exemplary embodiment. For the initial UL BWP corresponding to a Redcap terminal, the PRACH resources may be classified according to different coverage enhancement levels, and for the initial UL BWP corresponding to a normal terminal, the PRACH resources may also be classified according to different coverage enhancement levels. As illustrated in FIG. 2, for the initial UL BWP corresponding to the normal terminal, classification is performed according to different coverage enhancement levels, for example, coverage enhancement level 1, coverage enhancement level 2, and coverage enhancement level 3. Certainly, it is also possible to consider coverage enhancement level 1 as one transmission, or not using coverage enhancement. Therefore, the PRACH resources are classified into PRACH resources corresponding to the normal terminal with coverage enhancement level 1, PRACH resources corresponding to the normal terminal with coverage enhancement level 2, and PRACH resources corresponding to the normal terminal with coverage enhancement level 3. For the Initial UL BWP corresponding to the Redcap terminal, classification is performed according to different coverage enhancement levels, for example, coverage enhancement level 1, coverage enhancement level 2, and coverage enhancement level 3. Certainly, it is also possible to consider coverage enhancement level 1 as one transmission, or not using coverage enhancement. The PRACH resources are classified into PRACH resources corresponding to the Redcap terminal with coverage enhancement level 1, PRACH resources corresponding to the Redcap terminal with coverage enhancement level 2, and PRACH resources corresponding to the Redcap terminal with coverage enhancement level 3.

In this way, problems such as unreasonable reservation of PRACH resources and waste of PRACH resources are caused. Therefore, the disclosure provides a method for determining an access resource. The normal terminal shares corresponding PRACH resources with the Initial UL BWP corresponding to the Redcap terminal during coverage enhancement, an effect of reducing the classification of PRACH resources is achieved.

FIG. 3 is a flowchart of a method for allocating an access resource according to an exemplary embodiment. As illustrated in FIG. 3, the method for allocating an access resource is applied in a network device. The method includes the following steps.

At step S11, a first BWP is determined.

In the embodiment of the disclosure, the first BWP at least includes a PRACH resource for a terminal of a first type that needs to perform coverage enhancement, and/or a PRACH resource for a terminal of a second type.

The terminal of the first type and the terminal of the second type are distinguished based on capabilities of the terminals. The terminal of the first type has a greater capacity than the terminal of the second type, and the capacity may refer to a sending and receiving capability of the terminal. The terminal of the first type can be a normal terminal whose sending and receiving capability is relatively good, and the terminal of the second type can be a reduced capability terminal whose sending and receiving capability is relatively poor.

In an exemplary embodiment of the disclosure, the PRACH resource included in the first BWP may be the PRACH resource for the terminal of the first type that needs to perform coverage enhancement, and the first BWP may also include the PRACH resource for the terminal of the second type. The PRACH resource for the terminal of the first type that needs to perform coverage enhancement and the PRACH resource for the terminal of the first type that needs to perform coverage enhancement are shared PRACH resources.

In an implementation, the first BWP includes a plurality of PRACH resources for the terminal of the first type that needs to perform coverage enhancement, the plurality of PRACH resources are determined based on a plurality of coverage enhancement levels. The plurality of coverage enhancement levels are a plurality of coverage enhancement levels for the terminal of the first type that needs to perform coverage enhancement.

In an implementation, the terminal of the second type is a terminal that needs to perform coverage enhancement. The first BWP includes a plurality of PRACH resources for the terminal of the second type that needs to perform coverage enhancement, and the plurality of PRACH resources are determined based on a plurality of coverage enhancement levels. The plurality of coverage enhancement levels are a plurality of coverage enhancement levels for the terminal of the second type that needs to perform coverage enhancement.

The plurality of PRACH resources and the plurality of coverage enhancement levels are in a one-to-one mapping relation.

The above two implementations may be implemented separately or together.

In the embodiment of the disclosure, the first BWP may also include a PRACH resource for a terminal of the first type that does not need to perform coverage enhancement. That is, the network device can configure the PRACH resource for the terminal of the first type that does not need to perform coverage enhancement, the PRACH resource for the terminal of the first type that needs to perform coverage enhancement, and the PRACH resource for the terminal of the second type in the same BWP.

In the method for determining an access resource provided in the disclosure, the network device determines the plurality of coverage enhancement levels, and determines the plurality of PRACH resources based on the plurality of coverage enhancement levels. The plurality of PRACH resources and the plurality of coverage enhancement levels are determined to be in a one-to-one mapping relation. Therefore, the terminal can determine a BWP to be accessed based on its own type and the coverage enhancement level.

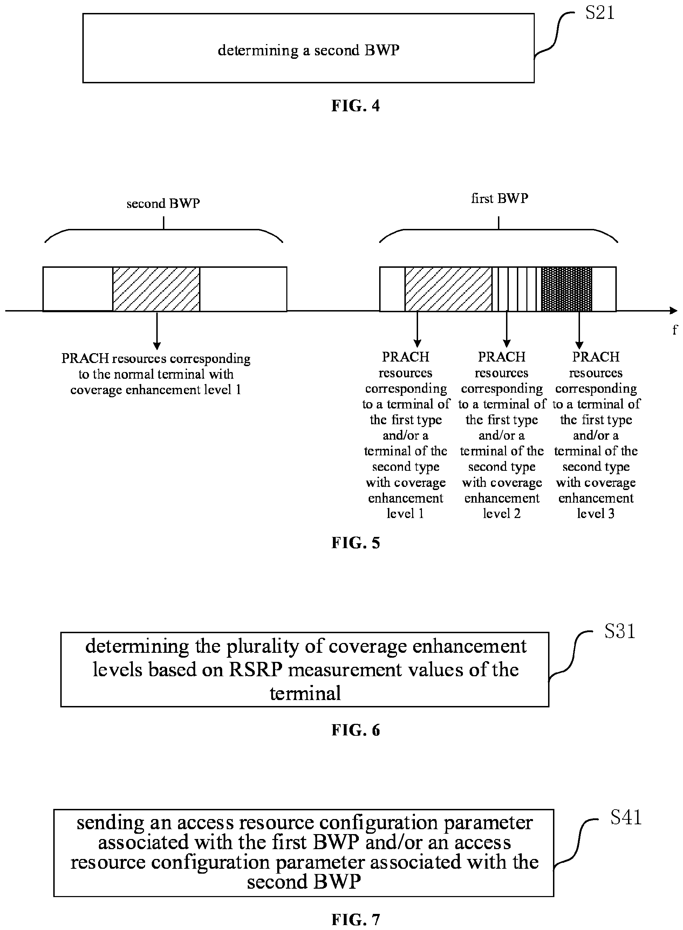

FIG. 4 is a flowchart of a method for allocating an access resource according to an exemplary embodiment. As illustrated in FIG. 4, the method for allocating an access resource is applied in a network device. The method includes the following steps.

At step S21, a second BWP is determined.

In the embodiment of the disclosure, the second BWP at least includes a PRACH resource for a terminal of a first type that does not need to perform coverage enhancement.

In an implementation, the network configures a separate BWP for the terminal of the first type that does not need to perform coverage enhancement, and the BWP includes the PRACH resource for the terminal of the first type of that does not need to perform coverage enhancement.

In an implementation, the second BWP further includes a PRACH resource for a terminal of a second type. That is, the network device can also configure the PRACH resource for the terminal of the second type and the PRACH resource for the terminal of the first type that does not need to perform coverage enhancement in the same BWP.

FIG. 5 is a schematic diagram of allocating access resources according to an exemplary embodiment. The first BWP and the second BWP are shown in FIG. 5. The first BWP includes a PRACH resource for a terminal of a first type that needs to perform coverage enhancement, and/or a PRACH resource for a terminal of a second type. The second BWP includes a PRACH resource for a terminal of the first type that does not need to perform coverage enhancement.

In FIG. 5, f represents frequency resources. It should be noted that not needing to perform coverage enhancement can be understood as only performing transmission once, and it is also referred to as coverage enhancement level 1 in the disclosure.

In an exemplary embodiment of the disclosure, the second BWP also includes the PRACH resource for the terminal of the second type. The second BWP further includes at least one of the followings:
a PRACH resource for the terminal of the first type that does not need to perform coverage enhancement;
a PRACH resource for a terminal of the second type that needs to perform coverage enhancement; or
a PRACH resource for a terminal of the second type that does not need to perform coverage enhancement.

In the embodiment of the disclosure, it should be noted that the PRACH resource for the terminal of the first type that needs to perform coverage enhancement and/or the PRACH resource for the terminal of the second type that needs to perform coverage enhancement is different from the PRACH resource for the terminal of the first type that does not need to perform coverage enhancement and/or the PRACH resource for the terminal of the second type that does not need to perform coverage enhancement.

The PRACH resource for the terminal of the first type and/or the PRACH resource for the terminal of the second type includes at least one of the followings:
a PRACH time domain resource;
a PRACH frequency domain resource; and
a PRACH preamble.

That is, configuring the PRACH resources for the terminal of the first type and/or configuring the PRACH resources for the terminal of the second type by the network device may be configuring one kind of: a plurality of PRACH time domain resources, a plurality of PRACH frequency domain resources, or a plurality of PRACH preambles.

In the embodiment of the disclosure, the frequency resources where the first BWP and the second BWP are located can be identical, different, or partially the same.

FIG. 6 is a flowchart of a method for allocating an access resource according to an exemplary embodiment. As illustrated in FIG. 6, determining the plurality of coverage enhancement levels includes the following steps.

At step S31, the plurality of coverage enhancement levels are determined based on RSRP measurement values of a terminal.

In the embodiment of the disclosure, the terminal may report an RSRP measurement value, and the network device determines a corresponding coverage enhancement level based on the received RSRP measurement value. Further, a plurality of PRACH resources for a terminal of a first type that needs to perform coverage enhancement, and/or, a plurality of PRACH resources for a terminal of a second type are determined, based on the plurality of coverage enhancement levels.

FIG. 7 is a flowchart of a method for allocating an access resource according to an exemplary embodiment. As illustrated in FIG. 7, the method is applied to a network device. The method includes the following steps.

At step S41, an access resource configuration parameter associated with a first BWP and/or an access resource configuration parameter associated with a second BWP are sent.

In the embodiment of the disclosure, the access resource configuration parameter associated with the first BWP and/or the access resource configuration parameter associated with the second BWP may be carried in remaining minimum system information (RMSI), and the RMSI is sent.

The access resource configuration parameter associated with the first BWP and/or the access resource configuration parameter associated with the second BWP includes at least one of the followings:
a frequency domain location of the first BWP and/or a frequency domain location of the second BWP;
PRACH resource configuration for a terminal of a first type that needs to perform coverage enhancement in the first BWP;
PRACH resource configuration for a terminal of a second type;
PRACH resource configuration for a terminal of the first type that does not need to perform coverage enhancement in the second BWP; and
a mapping relation between a plurality of coverage enhancement levels and a plurality of RACH resources in the first BWP.

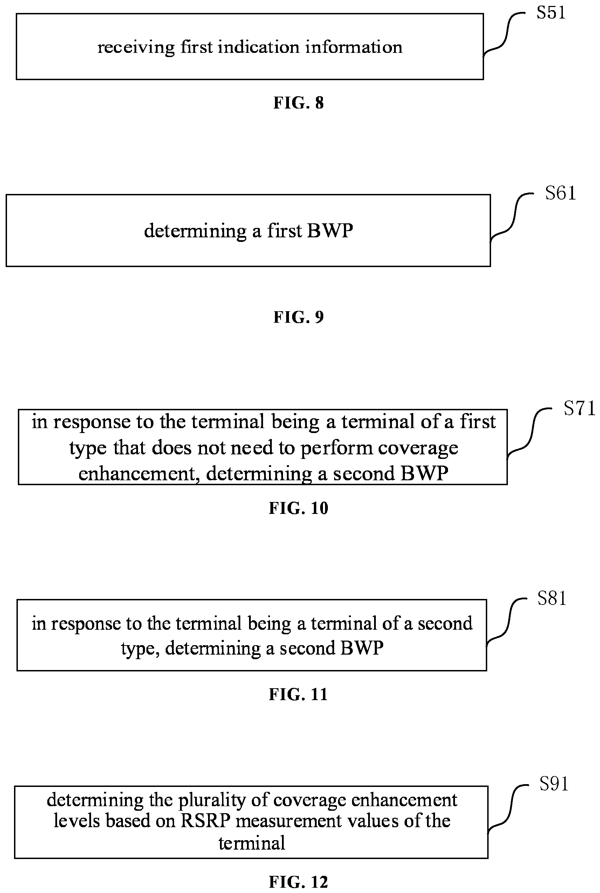

FIG. 8 is a flowchart of a method for allocating an access resource according to an exemplary embodiment. As illustrated in FIG. 8, the method is applied to a network device. The method includes the following steps.

At step S51, first indication information is received.

In the embodiment of the disclosure, the first indication information includes receiving and sending capability information associated with a terminal of a second type. The terminal of the second type may report its own receiving and sending capability information. The network device determines an access resource for the terminal of the second type based on the received receiving and sending capability information of the terminal of the second type.

In an exemplary embodiment of the disclosure, the network device may receive the first indication information based on an access message. For example, during an access process, the first indication information sent by the terminal is received via the Msg. 3.

In an exemplary embodiment of the disclosure, the network device may receive the first indication information based on a radio resource control (RRC) signaling. For example, the network device receives the first indication information based on the RRC signaling after the terminal completes the access process.

Based on the same/similar conception, the embodiments of the disclosure also provide a method for determining an access resource.

FIG. 9 is a flowchart of a method for allocating an access resource according to an exemplary embodiment. As illustrated in FIG. 9, the method is applied to a terminal. The method includes the following steps.

At step S61, a first BWP is determined.

In an embodiment of the disclosure, the terminal is a terminal of a first type that needs to perform coverage enhancement or a terminal of a second type. The first BWP at least includes a PRACH resource for the terminal of the first type that needs to perform coverage enhancement, and/or a PRACH resource for the terminal of the second type. The capability of the terminal of the first type is greater than the capability of the terminal of the second type.

In an exemplary embodiment of the disclosure, the terminal determines its own terminal type. If the terminal is the terminal of the first type that needs to perform coverage enhancement, the first BWP is determined. According to a coverage enhancement level for the coverage enhancement needed to be performed, a PRACH resource corresponding to the coverage enhancement level is determined in the first BWP.

In an exemplary embodiment of the disclosure, the terminal determines its own terminal type. If the terminal is the terminal of the second type, it determines the first BWP, and determines whether the terminal of the second type needs to perform coverage enhancement. In an implementation, in response to the terminal of the second type not needing to perform coverage enhancement, a PRACH resource corresponding to the terminal of the second type that does not need to perform coverage enhancement is determined in the first BWP. In another implementation, in response to the terminal of the second type needing to perform coverage enhancement, a coverage enhancement level for the coverage enhancement needed to be performed is determined, and a PRACH resource corresponding to the coverage enhancement level is determined in the first BWP based on the coverage enhancement level.

In the method for determining an access resource provided by the disclosure, the terminal of the first type that needs to perform coverage enhancement and the terminal of the second type share one BWP, to reduce the number of different PRACH resources configured for the terminal of the first type that needs to perform coverage enhancement, which achieves the effect of reducing the number of resource fragmentations and reducing resource waste.

In an implementation, the first BWP includes a plurality of PRACH resources for the terminal of the first type that needs to perform coverage enhancement, the plurality of PRACH resources are determined based on a plurality of coverage enhancement levels. The plurality of coverage enhancement levels are a plurality of coverage enhancement levels of the terminal of the first type that needs to perform coverage enhancement.

The terminal types include the first type and the second type. The terminal of the first type and the terminal of the second type are distinguished based on the capabilities of the terminals. The terminal of the first type has a greater capacity than the terminal of the second type, and the capacity may refer to a sending and receiving capability of the terminal. The terminal of the first type can be a normal terminal whose sending and receiving capability is relatively good, and the terminal of the second type can be a reduced capability terminal whose sending and receiving capability is relatively poor.

In an implementation, the terminal of the second type is a terminal that needs to perform coverage enhancement. The first BWP includes a plurality of PRACH resources for the terminal of the second type that needs to perform coverage enhancement, and the plurality of PRACH resources are determined based on a plurality of coverage enhancement levels. The plurality of coverage enhancement levels are a plurality of coverage enhancement levels of the terminal of the second type that needs to perform coverage enhancement.

The plurality of PRACH resources and the plurality of coverage enhancement levels are in a one-to-one mapping relation.

The above two implementations may be implemented separately or together.

In the method for determining an access resource provided in the disclosure, the network device determines the plurality of coverage enhancement levels, and determines the plurality of PRACH resources based on the plurality of coverage enhancement levels, and it also determines that the plurality of PRACH resources and the plurality of coverage enhancement levels are in a one-to-one mapping relation. Therefore, the terminal can determine a BWP to be accessed based on its own type and the coverage enhancement level.

FIG. 10 is a flowchart of a method for allocating an access resource according to an exemplary embodiment. As illustrated in FIG. 10, the method is applied to a terminal. The method includes the following steps.

At step S71, in response to the terminal being a terminal of a first type that does not need to perform coverage enhancement, a second BWP is determined.

In the embodiment of the disclosure, the second BWP at least includes a plurality of PRACH resources for the terminal of the first type that does not need to perform coverage enhancement.

In another implementation of the disclosure, in response to the terminal being the terminal of the first type that does not need to perform coverage enhancement, a first BWP is determined. The first BWP further includes the plurality of PRACH resources for the terminal of the first type that does not need to perform coverage enhancement. That is, the PRACH resources for the terminal of the first type that does not need to perform coverage enhancement, the PRACH resources for the terminal of the first type that needs to perform coverage enhancement, and the PRACH resources for a terminal of a second type are configured in the same BWP. The terminal determines a corresponding PRACH resource in the first BWP according to its type or the coverage enhancement level of the coverage enhancement needed to be performed.

FIG. 11 is a flowchart of a method for allocating an access resource according to an exemplary embodiment. As illustrated in FIG. 11, the method is applied to a terminal. The method includes the following steps.

At step S81, in response to the terminal being a terminal of a second type, a second BWP is determined.

In the embodiment of the disclosure, the second BWP further includes the PRACH resource for the terminal of the second type.

In an exemplary embodiment of the disclosure, the second BWP further includes at least one of the followings:
a PRACH resource for the first type that does not need to perform coverage enhancement;
a PRACH resource for a terminal of the second type that needs to perform coverage enhancement; or
a PRACH resource for a terminal of the second type that does not need to perform coverage enhancement.

In the embodiment of the disclosure, it should be noted that the PRACH resource for the terminal of the first type that needs to perform coverage enhancement and/or the PRACH resource for the terminal of the second type that needs to perform coverage enhancement is different from the PRACH resource for the terminal of the first type that does not need to perform coverage enhancement and/or the PRACH resource for the terminal of the second type that does not need to perform coverage enhancement.

The PRACH resource for the terminal of the first type and/or the PRACH resource for the terminal of the second type includes at least one of the followings:
a PRACH time domain resource;
a PRACH frequency domain resource; and
a PRACH preamble.

That is, configuring the PRACH resources for the terminal of the first type and/or configuring the PRACH resources for the terminal of the second type by the network device may be configuring one kind of: a plurality of PRACH time domain resources, a plurality of PRACH frequency domain resources, or a plurality of PRACH preambles.

In the embodiment of the disclosure, the frequency resources where the first BWP and the second BWP are located can be identical, different, or partially the same.

FIG. 12 is a flowchart of a method for allocating an access resource according to an exemplary embodiment. As illustrated in FIG. 12, determining the plurality of coverage enhancement levels includes the following steps.

At step S91, the plurality of coverage enhancement levels are determined based on RSRP measurement values of a terminal.

In the embodiment of the disclosure, the terminal may report an RSRP measurement value, and the network device determines a corresponding coverage enhancement level based on the received RSRP measurement value. Further, a plurality of PRACH resources for a terminal of a first type that needs to perform coverage enhancement are determined, and/or, a plurality of PRACH resources for a terminal of a second type are determined, based on the plurality of coverage enhancement levels.

The terminal determines the coverage enhancement level based on the RSRP measurement value and determines the PRACH resource corresponding to the coverage enhancement level.

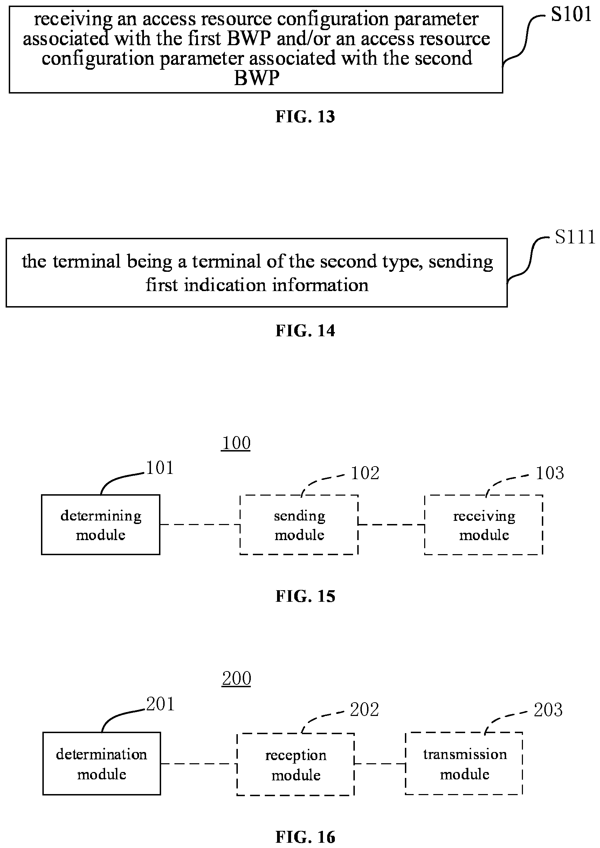

FIG. 13 is a flowchart of a method for allocating an access resource according to an exemplary embodiment. As illustrated in FIG. 13, the method is applied to a terminal. The method includes the following steps.

At step S101, an access resource configuration parameter associated with a first BWP and/or an access resource configuration parameter associated with a second BWP are received.

In the embodiment of the disclosure, a network device may carry the access resource configuration parameter associated with the first BWP and/or the access resource configuration parameter associated with the second BWP in RMSI, and send the RMSI.

The terminal receives the RMSI and determines the access resource configuration parameter associated with the first BWP and/or the access resource configuration parameter associated with the second BWP based on the RMSI.

In the embodiment of the disclosure, the access resource configuration parameter associated with the first BWP and/or the access resource configuration parameter associated with the second BWP includes at least one of the followings:
a frequency domain location of the first BWP and/or a frequency domain location of the second BWP;
PRACH resource configuration for a terminal of a first type that needs to perform coverage enhancement in the first BWP;
PRACH resource configuration for a terminal of a second type;
PRACH resource configuration for a terminal of the first type that does not need to perform coverage enhancement in the second BWP; and
a mapping relation between a plurality of coverage enhancement levels and the plurality of RACH resources in the first BWP.

FIG. 14 is a flowchart of a method for allocating an access resource according to an exemplary embodiment. As illustrated in FIG. 14, the method is applied to a network device. The method includes the following steps.

At step Sill, in response to the terminal being a terminal of a second type, it is determined that first indication information is sent.

In the embodiment of the disclosure, the first indication information includes receiving and sending capability information associated with the terminal of the second type. The terminal of the second type may report its own receiving and sending capability information. The network device determines an access resource for the terminal of the second type based on the received receiving and sending capability information of the terminal of the second type.

In an exemplary embodiment of the disclosure, the terminal may send the first indication information based on an access message. For example, the first indication information is sent via the Msg. 3 during an access process.

In an exemplary embodiment of the disclosure, the terminal may send the first indication information based on a RRC signaling. For example, the terminal sends the first indication information based on the RRC signaling after the terminal completes the access process.

Based on the same concept, the embodiments of the disclosure also provide an apparatus for allocating an access resource.

It is understood that the apparatus for determining an access resource provided by the embodiments of the disclosure includes hardware structures and/or software modules for performing respective functions in order to achieve the above functions. In combination with the units and algorithmic steps of the various examples disclosed in the embodiments of the disclosure, the embodiments of the disclosure can be implemented in the form of hardware or a combination of hardware and computer software. Whether a particular function is performed by hardware or by a way of driving hardware by computer software depends on the particular application and design constraints of the technical solution. Those skilled in the art may use different methods for each particular application to implement the described functions, but such implementation should not be considered as beyond the scope of the technical solutions of the embodiments of the disclosure.

FIG. 15 is a block diagram of an apparatus 100 for configuring an access resource according to an exemplary embodiment. As illustrated in FIG. 15, the apparatus 100 is applied to a network device. The apparatus 100 includes a determining module 101.

The determining module 101 is configured to determine a first BWP. The first BWP at least includes a PRACH resource for a terminal of a first type that needs to perform coverage enhancement, and/or a PRACH resource for a terminal of a second type.

In the embodiment of the disclosure, the first BWP includes a plurality of PRACH resources for the terminal of the first type that needs to perform coverage enhancement, and the plurality of PRACH resources are determined based on a plurality of coverage enhancement levels. The plurality of coverage enhancement levels are a plurality of coverage enhancement levels of the terminal of the first type that needs to perform coverage enhancement.

In the embodiment of the disclosure, the first BWP includes a plurality of PRACH resources for a terminal of the second type that needs to perform coverage enhancement, and/or, the first BWP includes a plurality of PRACH resources for a terminal of the second type that does not need to perform coverage enhancement.

In an implementation, the plurality of PRACH resources are determined based on a plurality of coverage enhancement levels, and the plurality of coverage enhancement levels are a plurality of coverage enhancement levels of the terminal of the second type that needs to perform coverage enhancement.

In the embodiment of the disclosure, the plurality of PRACH resources and the plurality of coverage enhancement levels are in a one-to-one mapping relation.

In the embodiment of the disclosure, the determining module 101 is further configured to:
determine a second BWP, in which the second BWP at least includes a PRACH resource for a terminal of the first type that does not need to perform coverage enhancement.

In the embodiment of the disclosure, the second BWP further includes the PRACH resource for the terminal of the second type.

In the embodiment of the disclosure, the second BWP further includes at least one of the followings:
a PRACH resource for the first type that does not need to perform coverage enhancement; the PRACH resource for the terminal of the second type that needs to perform coverage enhancement; or the PRACH resource for the terminal of the second type that does not need to perform coverage enhancement.

In the embodiment of the disclosure, the PRACH resource that needs to perform coverage enhancement, the PRACH resource for the terminal of the first type that does not need to perform coverage enhancement, and the PRACH resource for the terminal of the second type that does not need to perform coverage enhancement are different.

In the embodiment of the disclosure, the PRACH resource for the terminal of the first type and/or the PRACH resource for the terminal of the second type includes at least one of the followings:
a PRACH time domain resource;
a PRACH frequency domain resource; and
a PRACH preamble.

In the embodiment of the disclosure, the coverage enhancement level is determined based on an RSRP measurement value of the terminal.

In the embodiment of the disclosure, as illustrated in FIG. 15, the apparatus 100 further includes: a sending module 102.

The sending module 102 is configured to send an access resource configuration parameter associated with the first BWP and/or an access resource configuration parameter associated with the second BWP.

In the embodiment of the disclosure, the sending module 102 is further configured to:
send RMSI, the RMSI including the access resource configuration parameter associated with the first BWP and/or the access resource configuration parameter associated with the second BWP.

In the embodiment of the disclosure, the access resource configuration parameter associated with the first BWP and/or the access resource configuration parameter associated with the second BWP includes at least one of the followings:
a frequency domain location of the first BWP and/or a frequency domain location of the second BWP;
PRACH resource configuration for the terminal of the first type that needs to perform coverage enhancement in the first BWP;
PRACH resource configuration for the terminal of the second type;
PRACH resource configuration for the terminal of the first type that does not need to perform coverage enhancement in the second BWP; and
a mapping relation between a plurality of coverage enhancement levels and a plurality of RACH resources in the first BWP.

In the embodiment of the disclosure, as illustrated in FIG. 15, the apparatus 100 further includes: a receiving module 103.

The receiving module 103 is configured to receive first indication information, the first indication information including capability information associated with the terminal of the second type.

In the embodiment of the disclosure, the receiving module 103 is further configured to:
receive the first indication information based on an access message; or receive the first indication information based on an RRC signaling.

FIG. 16 is a block diagram of an apparatus 200 for configuring an access resource according to an exemplary embodiment. As illustrated in FIG. 16, the apparatus 200 is applied to a terminal. The apparatus 200 includes: a determination module 201.

The determination module 201 is configured to determine a first BWP. The terminal is a terminal of a first type that needs to perform coverage enhancement or a terminal of a second type. The first BWP at least includes a PRACH resource for the terminal of the first type that needs to perform coverage enhancement, and/or a PRACH resource for the terminal of the second type. The terminal of the first type has a greater capacity than the terminal of the second type.

In the embodiment of the disclosure, the first BWP includes a plurality of PRACH resources for the terminal of the first type that needs to perform coverage enhancement, and the plurality of PRACH resources are determined based on a plurality of coverage enhancement levels.

The plurality of coverage enhancement levels are a plurality of coverage enhancement levels of the terminal of the first type that needs to perform coverage enhancement.

In the embodiment of the disclosure, the first BWP includes a plurality of PRACH resources for a terminal of the second type that needs to perform coverage enhancement, and/or, the first BWP includes a PRACH resource for a terminal of the second type that does not need to perform coverage enhancement.

In the embodiment of the disclosure, the plurality of PRACH resources are determined based on a plurality of coverage enhancement levels, and the plurality of coverage enhancement levels are a plurality of coverage enhancement levels of the terminal of the second type that needs to perform coverage enhancement.

In the embodiment of the disclosure, the plurality of PRACH resources and the plurality of coverage enhancement levels are in a one-to-one mapping relation.

In the embodiment of the disclosure, the determination module 201 is further configured to: in response to the terminal being a terminal of the first type that does not need to perform coverage enhancement, determine a second BWP, in which the second BWP at least includes a PRACH resource for the terminal of the first type that does not need to perform coverage enhancement.

In the embodiment of the disclosure, the determination module 201 is further configured to: in response to the terminal being the terminal of the second type, determine a second BWP, in which the second BWP includes the PRACH resource for the terminal of the second type.

In the embodiment of the disclosure, the second BWP further includes at least one of the followings:
a PRACH resource for the first type that does not need to perform coverage enhancement;
the PRACH resource for the terminal of the second type that needs to perform coverage enhancement; or
a PRACH resource for a terminal of the second type that does not need to perform coverage enhancement.

In the embodiment of the disclosure, the PRACH resource that needs to perform coverage enhancement, the PRACH resource for the terminal of the first type that does not need to perform coverage enhancement, and the PRACH resource for the terminal of the second type that does not need to perform coverage enhancement are different.

In the embodiment of the disclosure, the PRACH resource for the terminal of the first type and/or the PRACH resource for the terminal of the second type includes at least one of the followings:
a PRACH time domain resource;
a PRACH frequency domain resource; and
a PRACH preamble.

In the embodiment of the disclosure, the coverage enhancement level is determined based on an RSRP measurement value of the terminal.

In the embodiment of the disclosure, as illustrated in FIG. 16, the apparatus 200 further includes: a reception module 202.

The reception module 202 is configured to receive an access resource configuration parameter associated with the first BWP and/or an access resource configuration parameter associated with the second BWP.

In the embodiment of the disclosure, the reception module 202 is further configured to: receive RMSI, the RMSI including the access resource configuration parameter associated with the first BWP and/or the access resource configuration parameter associated with the second BWP.

In the embodiment of the disclosure, the access resource configuration parameter associated with the first BWP and/or the access resource configuration parameter associated with the second BWP includes at least one of the followings:
a frequency domain location of the first BWP and/or a frequency domain location of the second BWP;
PRACH resource configuration for the terminal of the first type that needs to perform coverage enhancement in the first BWP;
PRACH resource configuration for the terminal of the second type;
PRACH resource configuration for the terminal of the first type that does not need to perform coverage enhancement in the second BWP; and
a mapping relation between a plurality of coverage enhancement levels and a plurality of RACH resources in the first BWP.

In the embodiment of the disclosure, as illustrated in FIG. 16, the apparatus 200 further includes:
a transmission module 203, configured to, in response to the terminal being the terminal of the second type, send first indication information, the first indication information including capability information associated with the terminal of the second type.

In the embodiment of the disclosure, the transmission module 203 is further configured to: send the first indication information based on an access message; or send the first indication information based on an RRC signaling.

Regarding the apparatuses in the above embodiments, the specific way in which each module performs its operation has been described in detail in the method embodiments, and will not be described in detail here.

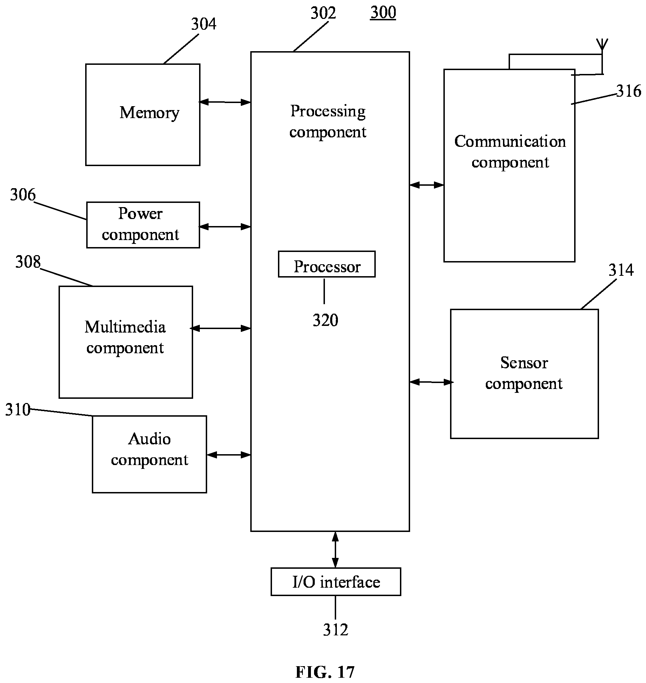

FIG. 17 is a block diagram of a device 300 for determining an access resource according to an exemplary embodiment. For example, the device 300 may be a mobile phone, a computer, a digital broadcasting terminal, a message transceiver device, a game console, a tablet device, a medical device, a fitness device and a PDA.

As illustrated in FIG. 17, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, telephone call, data communication, camera operation, and recording operation. The processing component 302 may include one or more processors 320 to perform instructions to implement all or part of the steps in the above described methods. Moreover, the processing component 302 may include one or more modules which facilitate the interaction between the processing component 302 and other components. For example, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, videos, etc. The memory 304 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a Read Only Memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front-facing camera and/or a rear-facing camera. When the device 300 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 310 is configured to output and/or input audio signals. For example, the audio component 310 includes a microphone (MIC) configured to receive an external audio signal when the device 300 is in an operation mode, such as a calling mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as a keyboard, a click wheel, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of a user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may also include a light sensor, such as a Complementary Metal Oxide Semiconductor (CMOS) or Charge-Coupled Device (CCD) image sensor, for use in imaging applications. In some embodiments, the sensor component 314 may also include an accelerometer sensor, a gyroscope sensor, a magnetic sensor, a pressure sensor, or a temperature sensor.

The communication component 316 is configured to facilitate communication, wired or wirelessly, between the device 300 and other devices. The device 300 can access a wireless network based on a communication standard, such as WiFi, 2G, or 3G, or a combination thereof. In an exemplary embodiment, the communication component 316 receives a broadcast signal from an external broadcast management system or broadcast associated information via a broadcast channel. In an exemplary embodiment, the communication component 316 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the device 300 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In the exemplary embodiments, there is also provided a non-transitory computer readable storage medium including instructions, such as the memory 304, executable by the processor 320 in the device 300, for implementing the above methods. For example, the non-transitory computer-readable storage medium may be a ROM, a Random Access Memory (RAM), a CD-ROM, a magnetic tape, a floppy disc, and an optical data storage device.

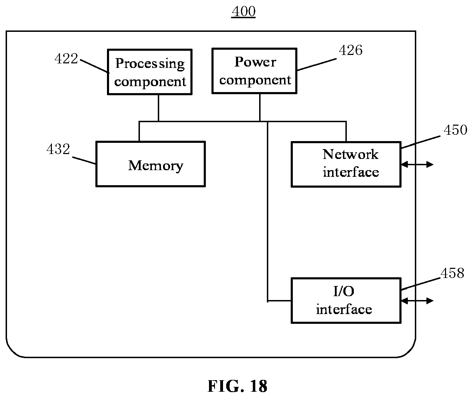

FIG. 18 is a block diagram of a device 400 for determining an access resource according to an exemplary embodiment. For example, the device 400 may be provided as a server. As illustrated in FIG. 18, the device 400 includes a processing component 422 including one or more processors, and memory resources represented by a memory 432 for storing instructions that can be executed by the processing component 422, such as applications. The application programs stored in the memory 432 may include one or more modules each corresponding to a set of instructions. In addition, the processing component 422 is configured to execute the instructions to perform the method for determining an access resource described above.

The device 400 may also include a power component 426 configured to perform power management of the device 400, a wired or wireless network interface 450 configured to connect the device 400 to a network, and an I/O interface 458. The device 400 may operate on an operating system stored in the memory 432, such as Windows ServerTM, Mac OS XTM, UnixTM, LinuxTM, FreeBSDTM, or the like.

It is further understood that the term "multiple" in the disclosure refers to two or more, which is the similar for other quantifiers. The term "and/or" describes a relation of associated objects, which indicates three relations, for example, "A and/or B" indicates that A exists alone, A and B both exist, and B exists alone. The character "/" generally indicates that the associated objects prior to and after the character "/" is an "or" relation. The terms "a", "said" and "the" in the singular form are also intended to include the plural form, unless the context clearly indicates otherwise.

It is further understood that the terms "first", "second", etc. are used to describe various types of information, but that such information should not be limited to these terms. These terms are used only to distinguish information of the same type from each another and do not indicate a particular order or degree of importance. In fact, the expressions "first" and "second" can be used interchangeably. For example, without departing from the scope of this disclosure, first information may also be referred to as second information, and similarly, second information may also be referred to as first information.

It is further understood that although the operations are depicted in the accompanying drawings in a particular order in the embodiments of the disclosure, this should not be construed as requiring that the operations be performed in the particular sequence shown or in a serial sequence, or that all of the operations shown be performed to obtain the desired results. Multitasking and parallel processing may be advantageous in particular environments.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for determining an access resource, applied to a network device, comprising:
determining a first bandwidth part (BWP);
wherein the first BWP at least comprises a physical random access channel (PRACH) resource for a terminal of a first type that needs to perform coverage enhancement, and/or a PRACH resource for a terminal of a second type.

2. The method of claim 1, wherein the first BWP comprises a plurality of PRACH resources for the terminal of the first type that needs to perform coverage enhancement, and the plurality of PRACH resources are determined based on a plurality of coverage enhancement levels; and
the plurality of coverage enhancement levels are a plurality of coverage enhancement levels of the terminal of the first type that needs to perform coverage enhancement.

3. The method of claim 1 or 2, wherein the first BWP comprises a plurality of PRACH resources for a terminal of the second type that needs to perform coverage enhancement, and/or,
the first BWP comprises a PRACH resource for a terminal of the second type that does not need to perform coverage enhancement.

4. The method of claim 3, wherein the plurality of PRACH resources are determined based on a plurality of coverage enhancement levels; and
the plurality of coverage enhancement levels are a plurality of coverage enhancement levels of the terminal of the second type that needs to perform coverage enhancement.

5. The method of claim 2 or 3, wherein the plurality of PRACH resources and the plurality of coverage enhancement levels are in a one-to-one mapping relation.

6. The method of claim 1, further comprising:
determining a second BWP, wherein the second BWP at least comprises a PRACH resource for a terminal of the first type that does not need to perform coverage enhancement.

7. The method of claim 6, wherein the second BWP further comprises the PRACH resource for the terminal of the second type.

8. The method of claim 7, wherein the second BWP further comprises at least one of the followings:
a PRACH resource for the first type that does not need to perform coverage enhancement;
a PRACH resource for a terminal of the second type that needs to perform coverage enhancement; or
a PRACH resource for a terminal of the second type that does not need to perform coverage enhancement.

9. The method of claim 7, wherein the PRACH resource that needs to perform coverage enhancement, the PRACH resource for the terminal of the first type that does not need to perform coverage enhancement, and the PRACH resource for the terminal of the second type that does not need to perform coverage enhancement are different.

10. The method of any of claim 1, wherein the PRACH resource for the terminal of the first type and/or the PRACH resource for the terminal of the second type comprises at least one of the followings:
a PRACH time domain resource;
a PRACH frequency domain resource; and
a PRACH preamble.

11. The method of claim 2 or 3, wherein the coverage enhancement level is determined based on a reference signal received power (RSRP) measurement value of the terminal.

12. The method of claim 6, further comprising:
sending an access resource configuration parameter associated with the first BWP and/or an access resource configuration parameter associated with the second BWP.

13. The method of claim 12, wherein sending the access resource configuration parameter associated with the first BWP and/or the access resource configuration parameter associated with the second BWP comprises:
sending remaining minimum system information (RMSI), wherein the RMSI comprises the access resource configuration parameter associated with the first BWP and/or the access resource configuration parameter associated with the second BWP.

14. The method of claim 13, wherein the access resource configuration parameter associated with the first BWP and/or the access resource configuration parameter associated with the second BWP comprises at least one of the followings:
a frequency domain location of the first BWP and/or a frequency domain location of the second BWP;
PRACH resource configuration for the terminal of the first type that needs to perform coverage enhancement in the first BWP;
PRACH resource configuration for the terminal of the second type;
PRACH resource configuration for the terminal of the first type that does not need to perform coverage enhancement in the second BWP; and
a mapping relation between a plurality of coverage enhancement levels and a plurality of RACH resources in the first BWP.

15. The method of claim 1, further comprising:
receiving first indication information, wherein the first indication information comprises capability information associated with the terminal of the second type.

16. The method of claim 15, wherein receiving the first indication information comprises:
receiving the first indication information based on an access message; or
receiving the first indication information based on a radio resource control (RRC) signaling.

17. A method for determining an access resource, applied to a terminal, comprising:
determining a first BWP;
wherein the terminal is a terminal of a first type that needs to perform coverage enhancement or a terminal of a second type;
the first BWP at least comprises a PRACH resource for the terminal of the first type that needs to perform coverage enhancement, and/or a PRACH resource for the terminal of the second type; and
the terminal of the first type has a greater capacity than the terminal of the second type.

18. The method of claim 17, wherein the first BWP comprises a plurality of PRACH resources for the terminal of the first type that needs to perform coverage enhancement, and the plurality of PRACH resources are determined based on a plurality of coverage enhancement levels; and
the plurality of coverage enhancement levels are a plurality of coverage enhancement levels of the terminal of the first type that needs to perform coverage enhancement.

19. The method of claim 17, wherein the first BWP comprises a plurality of PRACH resources for a terminal of the second type that needs to perform coverage enhancement, and/or,
the first BWP comprises a PRACH resource for a terminal of the second type that does not need to perform coverage enhancement.

20. The method of claim 19, wherein the plurality of PRACH resources are determined based on a plurality of coverage enhancement levels; and
the plurality of coverage enhancement levels are a plurality of coverage enhancement levels of the terminal of the second type that needs to perform coverage enhancement.

21. The method of claim 18 or 19, wherein the plurality of PRACH resources and the plurality of coverage enhancement levels are in a one-to-one mapping relation.

22. The method of claim 18, further comprising:
in response to the terminal being a terminal of the first type that does not need to perform coverage enhancement, determining a second BWP, wherein the second BWP at least comprises a PRACH resource for the terminal of the first type that does not need to perform coverage enhancement.

23. The method of claim 22, further comprising:
in response to the terminal being the terminal of the second type, determining a second BWP, wherein the second BWP comprises the PRACH resource for the terminal of the second type.

24. The method of claim 23, wherein the second BWP further comprises at least one of the followings:
a PRACH resource for the first type that does not need to perform coverage enhancement;
a PRACH resource for a terminal of the second type that needs to perform coverage enhancement; or
a PRACH resource for a terminal of the second type that does not need to perform coverage enhancement.

25. The method of claim 24, wherein the PRACH resource that needs to perform coverage enhancement, the PRACH resource for the terminal of the first type that does not need to perform coverage enhancement, and the PRACH resource for the terminal of the second type that does not need to perform coverage enhancement are different.

26. The method of any of claim 17, wherein the PRACH resource for the terminal of the first type and/or the PRACH resource for the terminal of the second type comprises at least one of the followings:
a PRACH time domain resource;
a PRACH frequency domain resource; and
a PRACH preamble.

27. The method of claim 18 or 19, wherein the coverage enhancement level is determined based on a RSRP measurement value of the terminal.

28. The method of claim 24, further comprising:
receiving an access resource configuration parameter associated with the first BWP and/or an access resource configuration parameter associated with the second BWP.

29. The method of claim 28, wherein receiving the access resource configuration parameter associated with the first BWP and/or the access resource configuration parameter associated with the second BWP comprises:
receiving RMSI, wherein the RMSI comprises the access resource configuration parameter associated with the first BWP and/or the access resource configuration parameter associated with the second BWP.

30. The method of claim 28, wherein the access resource configuration parameter associated with the first BWP and/or the access resource configuration parameter associated with the second BWP comprises at least one of the followings:
a frequency domain location of the first BWP and/or a frequency domain location of the second BWP;
PRACH resource configuration for the terminal of the first type that needs to perform coverage enhancement in the first BWP;
PRACH resource configuration for the terminal of the second type;
PRACH resource configuration for the terminal of the first type that does not need to perform coverage enhancement in the second BWP; and
a mapping relation between a plurality of coverage enhancement levels and a plurality of RACH resources in the first BWP.

31. The method of claim 17, further comprising:
in response to the terminal being the terminal of the second type, sending first indication information, wherein the first indication information comprises capability information associated with the terminal of the second type.

32. The method of claim 31, wherein sending the first indication information comprises:
sending the first indication information based on an access message; or
sending the first indication information based on an RRC signaling.

33. An apparatus for determining an access resource, applied to a network device, comprising:
a determining module, configured to determine a first BWP;
wherein the first BWP at least comprises a PRACH resource for a terminal of a first type that needs to perform coverage enhancement, and/or a PRACH resource for a terminal of a second type.

34. The apparatus of claim 33, wherein the first BWP comprises a plurality of PRACH resources for the terminal of the first type that needs to perform coverage enhancement, and the plurality of PRACH resources are determined based on a plurality of coverage enhancement levels; and
the plurality of coverage enhancement levels are a plurality of coverage enhancement levels of the terminal of the first type that needs to perform coverage enhancement.

35. The apparatus of claim 33 or 34, wherein the first BWP comprises a plurality of PRACH resources for a terminal of the second type that needs to perform coverage enhancement, and/or,
the first BWP comprises a PRACH resource for a terminal of the second type that does not need to perform coverage enhancement.

36. The apparatus of claim 35, wherein the plurality of PRACH resources are determined based on a plurality of coverage enhancement levels; and
the plurality of coverage enhancement levels are a plurality of coverage enhancement levels of the terminal of the second type that needs to perform coverage enhancement.

37. The apparatus of claim 34 or 35, wherein the plurality of PRACH resources and the plurality of coverage enhancement levels are in a one-to-one mapping relation.

38. The apparatus of claim 33, wherein the determining module is further configured to:
determine a second BWP, wherein the second BWP at least comprises a PRACH resource for a terminal of the first type that does not need to perform coverage enhancement.

39. The apparatus of claim 38, wherein the second BWP further comprises the PRACH resource for the terminal of the second type.

40. The apparatus of claim 39, wherein the second BWP further comprises at least one of the followings:
a PRACH resource for the first type that does not need to perform coverage enhancement;
a PRACH resource for a terminal of the second type that needs to perform coverage enhancement; or
a PRACH resource for a terminal of the second type that does not need to perform coverage enhancement.

41. The apparatus of claim 39, wherein the PRACH resource that needs to perform coverage enhancement, the PRACH resource for the terminal of the first type that does not need to perform coverage enhancement, and the PRACH resource for the terminal of the second type that does not need to perform coverage enhancement are different.

42. The apparatus of any of claim 33, wherein the PRACH resource for the terminal of the first type and/or the PRACH resource for the terminal of the second type comprises at least one of the followings:
a PRACH time domain resource;
a PRACH frequency domain resource; and
a PRACH preamble.

43. The apparatus of claim 34 or 35, wherein the coverage enhancement level is determined based on a RSRP measurement value of the terminal.

44. The apparatus of claim 38, further comprising:
a sending module, configured to send an access resource configuration parameter associated with the first BWP and/or an access resource configuration parameter associated with the second BWP.

45. The apparatus of claim 44, wherein the sending module is further configured to:
send RMSI, wherein the RMSI comprises the access resource configuration parameter associated with the first BWP and/or the access resource configuration parameter associated with the second BWP.

46. The apparatus of claim 45, wherein the access resource configuration parameter associated with the first BWP and/or the access resource configuration parameter associated with the second BWP comprises at least one of the followings:
a frequency domain location of the first BWP and/or a frequency domain location of the second BWP;
PRACH resource configuration for the terminal of the first type that needs to perform coverage enhancement in the first BWP;
PRACH resource configuration for the terminal of the second type;
PRACH resource configuration for the terminal of the first type that does not need to perform coverage enhancement in the second BWP; and
a mapping relation between a plurality of coverage enhancement levels and a plurality of RACH resources in the first BWP.

47. The apparatus of claim 33, further comprising:
a receiving module, configured to receive first indication information, wherein the first indication information comprises capability information associated with the terminal of the second type.

48. The apparatus of claim 47, wherein the receiving module is further configured to:
receive the first indication information based on an access message; or
receive the first indication information based on an RRC signaling.

49. An apparatus for determining an access resource, applied to a terminal, comprising:
a determination module, configured to determine a first BWP;
wherein, the terminal is a terminal of a first type that needs to perform coverage enhancement or a terminal of a second type;
the first BWP at least comprises a PRACH resource for the terminal of the first type that needs to perform coverage enhancement, and/or a PRACH resource for the terminal of the second type; and
the terminal of the first type has a greater capacity than the terminal of the second type.

50. The apparatus of claim 49, wherein the first BWP comprises a plurality of PRACH resources for the terminal of the first type that needs to perform coverage enhancement, and the plurality of PRACH resources are determined based on a plurality of coverage enhancement levels; and
the plurality of coverage enhancement levels are a plurality of coverage enhancement levels of the terminal of the first type that needs to perform coverage enhancement.

51. The apparatus of claim 49, wherein the first BWP comprises a plurality of PRACH resources for a terminal of the second type that needs to perform coverage enhancement, and/or,
the first BWP comprises a PRACH resource for a terminal of the second type that does not need to perform coverage enhancement.

52. The apparatus of claim 51, wherein the plurality of PRACH resources are determined based on a plurality of coverage enhancement levels; and
the plurality of coverage enhancement levels are a plurality of coverage enhancement levels of the terminal of the second type that needs to perform coverage enhancement.

53. The apparatus of claim 50 or 51, wherein the plurality of PRACH resources and the plurality of coverage enhancement levels are in a one-to-one mapping relation.

54. The apparatus of claim 50, wherein the determination module is further configured to:
in response to the terminal being a terminal of the first type that does not need to perform coverage enhancement, determine a second BWP, wherein the second BWP at least comprises a PRACH resource for the terminal the first type that does not need to perform coverage enhancement.

55. The apparatus of claim 54, wherein the determination module is further configured to:
in response to the terminal being the terminal of the second type, determine a second BWP, wherein the second BWP comprises the PRACH resource for the terminal of the second type.

56. The apparatus of claim 55, wherein the second BWP further comprises at least one of the followings:
a PRACH resource for the first type that does not need to perform coverage enhancement;
a PRACH resource for a terminal of the second type that needs to perform coverage enhancement; or
a PRACH resource for a terminal of the second type that does not need to perform coverage enhancement.

57. The apparatus of claim 56, wherein the PRACH resource that needs to perform coverage enhancement, the PRACH resource for the terminal of the first type that does not need to perform coverage enhancement, and the PRACH resource for the terminal of the second type that does not need to perform coverage enhancement are different.

58. The apparatus of any of claim 49, wherein the PRACH resource for the terminal of the first type and/or the PRACH resource for the terminal of the second type comprises at least one of the followings:
a PRACH time domain resource;
a PRACH frequency domain resource; and
a PRACH preamble.

59. The apparatus of claim 50 or 51, wherein the coverage enhancement level is determined based on a RSRP measurement value of the terminal.

60. The apparatus of claim 56, further comprising:
a reception module, configured to receive an access resource configuration parameter associated with the first BWP and/or an access resource configuration parameter associated with the second BWP.

61. The apparatus of claim 60, wherein the reception module is further configured to:
receive RMSI, wherein the RMSI comprises the access resource configuration parameter associated with the first BWP and/or the access resource configuration parameter associated with the second BWP.

62. The apparatus of claim 60, wherein the access resource configuration parameter associated with the first BWP and/or the access resource configuration parameter associated with the second BWP comprises at least one of the followings:
a frequency domain location of the first BWP and/or a frequency domain location of the second BWP;
PRACH resource configuration for the terminal of the first type that needs to perform coverage enhancement in the first BWP;
PRACH resource configuration for the terminal of the second type;
PRACH resource configuration for the terminal of the first type that does not need to perform coverage enhancement in the second BWP; and
a mapping relation between a plurality of coverage enhancement levels and a plurality of RACH resources in the first BWP.

63. The apparatus of claim 49, further comprising:
a transmission module, configured to, in response to the terminal being the terminal of the second type, send first indication information, wherein the first indication information comprises capability information associated with the terminal of the second type.

64. The apparatus of claim 63, wherein the transmission module is further configured to:
send the first indication information based on an access message; or
send the first indication information based on an RRC signaling.

65. A device for determining an access resource, comprising:
a processor;
a memory for storing instructions executable by the processor; wherein
the processor is configured to implement the method for determining an access resource of any one of claims 1-16.

66. A device for determining an access resource, comprising:
a processor;
a memory for storing instructions executable by the processor; wherein
the processor is configured to implement the method for determining an access resource of any one of claims 17-32.

67. A computer readable storage medium having instructions stored thereon that, when executed by a processor, a network device is caused to implement the method for determining an access resource of any one of claims 1-16.

68. A computer readable storage medium having instructions stored thereon that, when executed by a processor, a mobile terminal is caused to implement the method for determining an access resource of any one of claims 17-32.
